# EUROPEAN PATENT SPECIFICATION

(11) **EP 3 699 043 B1**
(45) Date of publication and mention of the grant of the patent: **06.09.2023**
(21) Application number: 18867611.8
(22) Date of filing: 07.02.2018
(51) Int. Cl.: B60S 5/06

(54) **TRANSPORTER DOCKING DEVICE, POWER EXCHANGE TRANSPORTER AND DOCKING METHOD**
TRANSPORTERANDOCKVORRICHTUNG, STROMAUSTAUSCHTRANSPORTER UND ANDOCKVERFAHREN
DISPOSITIF D'AMARRAGE DE TRANSPORTEUR, TRANSPORTEUR D'ÉCHANGE D'ÉNERGIE ET PROCÉDÉ D'AMARRAGE

(30) Priority: 16.10.2017 CN 201710957845
(43) Date of publication of application: 26.08.2020
(73) Proprietor: NIO (Anhui) Holding Co., Ltd., Hefei City, Anhui Province (CN)
(72) Inventor: LI, Nan, Shanghai (CN); MA, Yongyue, Shanghai (CN); TIAN, Xiaotao, Shanghai (CN); DING, Xikun, Shanghai (CN); BENGTSSON, Jan, Shanghai (CN)
(74) Representative: Vossius & Partner Patentanwälte Rechtsanwälte mbB
(86) International application number: PCT/CN2018/075563
(87) International publication number: WO 2019/075964

(56) References cited:
- CN-A- 102 935 840
- CN-A- 102 935 840
- CN-A- 103 241 111
- CN-A- 103 241 111
- CN-U- 202 029 822
- CN-U- 202 029 822
- CN-U- 202 163 415
- CN-Y- 201 136 484
- CN-Y- 201 136 484
- US-A1- 2012 321 381

## Description

### FIELD OF THE INVENTION

The invention relates to the field of battery replacement of electric automobiles; more specifically, it relates to a positioning engaging structure of a battery swapping transporter for transferring batteries and a transporter engaging device.

### BACKGROUND OF THE INVENTION

With the supply pressure and tail gas pollution caused by traditional fossil energy source consumption, the development of traditional fuel automobiles enters a lag period. For this, the energy-saving and environment-friendly electric automobile shows blowout development in recent years for the sake of confidence in the prospect of the green energy source. At present, in the development process of the electric automobile, the insufficient battery capacity and the long charging time due to the limitation of the current battery technology are inevitable problems in the current stage. In order to solve such technical problems, on one hand, research and development investment of the battery technology itself is increased; on the other hand, the development of the peripheral technology of the battery is also increased. For example, battery replacement is an extremely quick, convenient, safe approach.

Specifically, battery swapping (i.e., battery replacement) refers to an energy supplementing way of the electric automobile to take off the power battery from a vehicle through a battery swapping device and replacing with another set of power batteries onto the electric automobile. The battery swapping station is a place for realizing battery swapping for a power battery of an electric automobile, and has the functions of charging, thermal management, communication, monitoring and the like. A certain number of battery boxes may be carried in the battery swapping station in advance, and a dedicated charging cable and a charging device are employed in the battery cabin for quickly connecting and charging.

During the battery swapping process, considering space limitations and the flexibility of automobile battery supply for car, a type of battery transferring device is inevitably needed to realize transferring of a battery between the battery storage platform and the electric automobile. And before the battery exchanging is performed, it is necessary to realize conveniently, quickly and accurately engagement between the transferring device and the battery storage platform.

At present, the engagement technology on the automatic production line is mostly fixed and non-detachable, movable engagement are mostly achieved by AGV automatic trolley and the conventional AGV moving trolley may be a fully automatic magnetic stripe guided walking carrying trolley, the moving trajectory of which is fixed, the positioning precision is low, the flexibility is poor, the cost is high, the volume is large in case that the load is large, and occupies a very large space, thereby not applicable to the battery swapping site of the miniature electric automobile. Therefore, how to provide a transporter engaging device which has small structure space and accurate positioning and convenient engagement becomes a technical problem to be urgently solved.

CN 102 935 840 A provides an assembling tool of power battery packs of new energy vehicles. The assembling tool comprises a movable rack, a battery pack lifting frame and a lifting control device, wherein the lifting frame is fixedly connected with the rack through a supporting frame fixedly arranged on the rack, and the lifting frame is perpendicular to the supporting frame. The lifting control device is used for controlling the lifting and landing of the supporting frame.

CN 201 136 484 Y discloses a vehicular battery replacement system positioning device which comprises a parallel moving platform, a rotary platform, a track, a vertical lifting device and a battery tray. The parallel moving platform is arranged on the track and can move along the track. The rotary platform is arranged on the parallel moving platform and the battery tray is arranged on the rotary platform by the vertical lifting device.

### SUMMARY OF THE INVENTION

The object of the invention is to provide a transporter engaging device capable of achieving accurate positioning and engaging battery swapping transporter.

Another object of the invention is to provide a battery swapping transporter capable of achieving accurate positioning and engagment with a transporter engaging device.

Yet another object of the invention is to provide an engaging method of a transporter engaging device with a battery swapping transporter. The objects of the present invention are achieved by the features of the independent claims. Further preferred embodiments of the present invention are defined in the dependent claims.

In particular, to realize the object of the present invention, according to one aspect of the present invention, there is provided a transporter engaging device, comprising: a bracket body; a first guiding portion disposed at a lower portion of the bracket body and can provide guiding for an engaging action of the transporter; and a first positioning portion disposed at an upper portion of the bracket body and can be positioned in engagement with the transporter.

The bracket body includes a top plate, a base, and a bracket post supported between the top plate and the base; wherein the first guiding portion is disposed on the base, and the first positioning portion is disposed on the top plate.

Optionally, the transporter engaging device further comprising a height adjusting portion disposed on the base for adjusting a height between the top plate and a mounting reference plane of the bracket body.

Optionally, the height adjusting portion comprises a foundation bolt, and the base comprises a first bottom plate connecting the bracket post, a second bottom plate disposed apart from the first bottom plate and is closer to the mounting reference plane; the foundation pin bolt is interposed between the first bottom plate and the second bottom plate, and is used for adjusting a distance between the first bottom plate and the second bottom plate.

The first guiding portion includes a guiding fork disposed toward a transporter engaging side, the guiding fork having a divergent guiding opening at a front end.

The first positioning portion comprises a positioning pin disposed at the upper portion of the bracket body.

Optionally, at least two of the positioning pins are disposed at two sides of the upper portion of the bracket body, respectively.

To realize the object of the present invention, according to another aspect of the present invention, there is provided a battery swapping transporter, comprising: a bearing portion used for bearing a battery to be replaced; a moving portion disposed at a bottom of the bearing portion and used for driving the bearing portion to move; a second guiding portion disposed at a lower portion of the bearing portion and can match with a first guiding portion of a transporter engaging device; and a second positioning portion disposed at an upper portion of the bearing portion and can match with a first positioning portion of the transporter engaging device.

The second guiding portion includes a guiding shaft extending in a vertical direction, the guiding shaft matching with the first guiding portion of the transporter engaging device.

Optionally, the second guiding portion further comprises a guiding roller coaxially disposed at the lower end of the guiding shaft, the guiding roller rotatably matching with the first guiding portion of the transporter engaging device.

Optionally, the bearing portion is capable of lifting motion in the vertical direction; the second positioning portion comprises a positioning end plate that protrudes by extending from the front portion of the bearing portion, a positioning hole is disposed on the positioning end plate, and the positioning hole can move in the vertical direction and match with the first positioning portion of the transporter engaging device.

Optionally, at least two of the positioning end plates are disposed at two sides of the front portion of the bearing portion, respectively.

To realize the object of the present invention, according to yet another aspect of the present invention, there is provided an engaging method for a battery swapping transporter and a transporter engaging device for the transporter engaging device as described above and the battery swapping transporter as described above, comprising: a guiding step, wherein a second guiding portion of the battery swapping transporter is in contact with a first guiding portion of the transporter engaging device and moves to a location to be positioned along the first guiding portion; and a positioning step, wherein a second positioning portion of the battery swapping transporter is lifted to be staggered and aligned with a first positioning portion of the transporter engaging device in a vertical direction, and the second positioning portion is lowered to engage with the first positioning portion.

The transporter engaging device and the battery swapping transporter according to the present invention enables the battery swapping transporter moving to the location to be positioned relative to the transporter engaging device through guide mating of the first guiding portion and the second guiding portion; and further enables accurate engagement between the two portions through cooperation of the first positioning portion and the second positioning portion. This set of device has simple structure, small volume and capable of saving a certain floor space while realizing quick and convenient engagement, which is especially suitable for small places and sites with small amount of battery swapping.

### BRIEF DESCRIPTION OF THE DRAWINGS

FIG. 1 is a schematic view of one embodiment of a transporter engaging device and a battery swapping transporter of the present invention, both of which are in a disengaged state.
FIG. 2 is a schematic view of one embodiment of the transporter engaging device and the battery swapping transporter in FIG. 1, both of which are in an engaged state.

### DETAILED DESCRIPTION OF THE EMBODIMENT(S) OF THE INVENTION

In accordance with the concepts of the present invention, there is provided herein an embodiment of a transporter engaging device and a battery swapping transporter matched therewith.

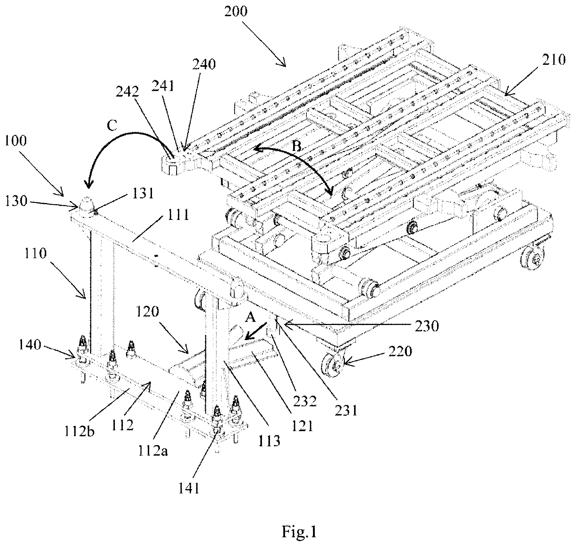

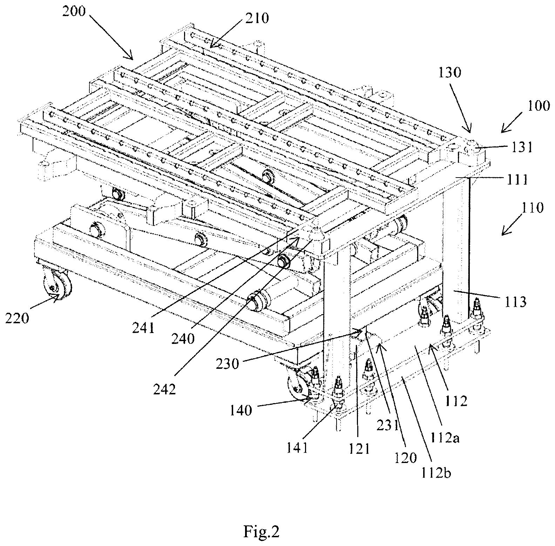

Referring to FIGS. 1 and 2, the transporter engaging device 100 comprises: a bracket body 110, a first guiding portion 120 disposed at a lower portion of the bracket body 110, and a first positioning portion 130 disposed at an upper portion of the bracket body 110. Wherein, the first guiding portion 120 is used to provide a guiding function for an engaging action of a matched transporter, and the first positioning portion 130 is used for providing positioning of engagement with the matched transporter. The transporter engaging device achieves a guiding match with the matched battery swapping transporter through the first guiding portion, so that the battery swapping transporter moves relative to the transporter engaging device to the location to be positioned; accurate engagement between the two is achieved through the first positioning portion and the matched battery swapping transporter. This set of device has simple structure, small volume and capable of saving a certain floor space while realizing quick and convenient engagement, which is especially suitable for small places and sites with small amount of battery swapping.

Wherein, due to the fact that the matched battery swapping transporter is a vehicle structure, it has the moving features such as wheels and the like. Therefore, disposing the first guiding portion at the lower portion of the bracket body can effectively utilize the car bottom space of the battery swapping transporter, without adding extra floor space achieving the guiding function. Further, since the matched battery swapping transporter typically has a lifting element to facilitate replacement of the battery for car. Therefore, disposing the first positioning portion at the upper portion of the bracket body can effectively utilize the existing lifting structure of the battery swapping transporter to realize positioning of engagement with the first positioning portion, without adding extra dedicated structure while achieving accurate engagement, effectively improving the utilization of the existing designed element.

Further, while only the first guiding portion and the first positioning portion are mentioned in the foregoing concept, and the specific structure thereof is not taught, the key of this concept is to effectively utilize the existing structure and the existing floor space of the battery swapping transporter matched therewith in combination with the disposing position of the two, and to achieve engagement with the battery swapping transporter while not adding structure and floor space as much as possible. With respect to the detailed configuration of the first guiding portion and the first positioning portion themselves, reference may be made to the design of a variety of mature guiding elements and positioning elements in the prior art, and they may be used herein to accomplish this concept.

Of course, to better realize this concept, several specific implementations of the first guiding portion and the first positioning portion and their association with the bracket body are also provided hereinafter, as will be described one by one below.

For example, the bracket body 110 of the transporter engaging device 100 includes a top plate 111, a base 112, and a bracket post 113 supported between the top plate 111 and the base 112; wherein the first guiding portion 120 is disposed on the base 112, and the first positioning portion 130 is disposed on the top plate 111. Such kind of frame type structure has comprehensive consideration for structural strength and manufacturing cost.

Optionally, the bracket body 110 may also include a height adjusting portion 140 disposed on the base 112 for adjusting the height between the top plate 111 and the mounting reference plane of the bracket body 110. The height adjusting function of the bracket body is thus realized, so that the bracket body can be applied to battery swapping transporters with different heights of the automobile body, improving the applicability of the device. Specifically, such height adjusting portion 140 may be a foundation bolt 141, and the base 112 includes a first bottom plate 112a connecting the bracket post 113 and a second bottom plate 112b disposed apart from the first bottom plate 112a and is closer to the mounting reference plane; the foundation bolt 141 is interposed between the first bottom plate 112a and the second bottom plate 112b and is used for adjusting the distance between the first bottom plate 112a and the second bottom plate 112b. The increase and decrease of the distance between the first bottom plate 112a and the second bottom plate 112b also directly affects the overall increase and decrease of the height of the bracket body, which is a specific implementation.

As another example, as one specific implementation, the first guiding portion 120 includes a guiding fork 121 disposed toward the transporter engaging side, and the front end of the guiding fork 121 has a divergent guiding opening. At this time, the guided element on the matched transporter may be gradually guided to the desired location to be positioned after contacting with the divergent guiding opening in order to proceed with the next engagement action.

As another example, as one specific implementation, the first positioning portion 130 includes a positioning pin 131 disposed at an upper portion of the bracket body 110. At this time, after the matched transporter has been moved to the desired location to be positioned, the element to be positioned thereon may be aligned with the positioning pin 131 and fitted thereon to complete the entire engaging process. Optionally, at least two positioning pins 131 are disposed at both sides of the upper portion of the bracket body 110, respectively. Through multi-point positioning, a more stable engaging effect may be achieved.

Referring also to FIGS. 1 and 2, a battery swapping transporter is also shown. The battery swapping transporter 200 comprises; a bearing portion 210 for bearing a battery to be replaced; a moving portion 220 which is disposed at the bottom of the bearing portion 210 and is used for driving the bearing portion 210 to move; a second guiding portion 230 disposed at the lower portion of the bearing portion 210 and a second positioning portion 240 disposed at the upper portion of the bearing portion 210. Wherein, the second guiding portion 230 is used to match with the first guiding portion 120 of the transporter engaging device 100; and the second positioning portion 240 is used to match with the first positioning portion 130 of the transporter engaging device 100. By disposing the guiding element and the positioning element matched with the transporter engaging device on the battery swapping transporter, rapid engagement of the two elements is effectively achieved.

As previously mentioned, since the matched battery swapping transporter is typically of a vehicle configuration, it has moving portions such as wheels by itself. Therefore, disposing the second guiding portion at the lower portion of the bearing portion can effectively utilize the residual car bottom space of the occupied portion that has been occupied by the moving portion below the bearing portion, without adding extra floor space while achieving the guiding function. Further, due to the fact that the bearing portion of the matched battery swapping transporter generally has a lifting function so as to realize the replacement of the battery for car. Therefore, disposing the second positioning portion at the upper portion of the bearing portion can effectively utilize the existing lifting function of the battery swapping transporter to realize positioning of engagement with the first positioning portion, without adding extra dedicated structure while achieving accurate engagement, effectively improving the utilization of the existing designed element.

Further, while only the second guiding portion and the second positioning portion are mentioned in the foregoing concept, and the specific structure thereof is not taught, the key of this concept is to effectively utilize the existing structure and the existing floor space of the battery swapping transporter matched therewith in combination with the disposing position of the two, and to achieve engagement with the battery swapping transporter while not adding structure and floor space as much as possible. With respect to the detailed configuration of the second guiding portion and the second positioning portion themselves, reference may be made to the design of a variety of mature guiding elements and positioning elements in the prior art, and they may be used herein to accomplish this concept.

Of course, to better realize this concept, several specific implementations of the second guiding portion and the second positioning portion and their association with the bearing portion are also provided hereinafter, as will be described one by one below.

For example, the second guiding portion 230 of the battery swapping transporter 200 comprises a guiding shaft 231 extending in a vertical direction that matches with the first guiding portion 120 of the transporter engaging device 100. Specifically, when the guiding shaft 231 is in contact with the divergent guiding opening of the guiding fork 121 of the first guiding portion 120, the guiding shaft 231 will be gradually moved to the desired position under the guide thereof. While when the guiding shaft 231 has been moved to the desired position, the battery swapping transporter 200 integrated therewith will also move to the desired location to be positioned in order to proceed with the next engagement action. Optionally, the second guiding portion 230 further includes a guiding roller 232 coaxially disposed at the lower end of the guiding shaft 231, the guiding roller 232 rotatably matches with the first guiding portion 120 of the transporter engaging device 100. In this arrangement, the registration of the guiding roller 232 with the guiding fork 121 is more stable. Therefore, the process of moving the battery swapping transporter 200 to the desired location to be positioned will also be more stable.

As another example, as a specific implementation, the bearing portion 210 is capable of lifting motion in the vertical direction; the second positioning portion 240 includes a positioning end plate 241 that protrudes by extending from the front portion of the bearing portion 210, a positioning hole 242 is disposed on the positioning end plate 241, and the positioning hole 242 is capable of moving in the vertical direction and matching with the first positioning portion 130 of the transporter engaging device 100. At this time, the positioning holes 242 on the positioning end plate 241 are staggered and aligned with the positioning pins 131 on the upper portion of the bracket body 110 by moving the bearing portion 210 upward after the battery swapping transporter has been moved to the desired location to be positioned; the bearing portion 210 is then moved downward so that the positioning pin 131 fits into the positioning hole 242, thereby enabling the entire engaging process of the battery swapping transporter and the transporter engaging device. Optionally, at least two positioning end plates 241 are disposed at both sides of the front portion of the bearing portion 210. Through multi-point positioning, a more stable engaging effect may be achieved.

Still further, in accordance with another aspect of the present concept, there is also provided an engaging method for implementing the engagement between the aforementioned battery swapping transporter 200 and transporter engaging device 100, which may be implemented not only by simply automatic controlling but also by manually operating of a worker. An implementation process of this is described in detail as follows. The engaging method comprises: guiding step S100, wherein the second guiding portion 230 of the battery swapping transporter 200 is in contact with the first guiding portion 120 of the transporter engaging device 100 and moves along the first guiding portion 120 to the location to be positioned; and positioning step S200, wherein the second positioning portion 240 of the battery swapping transporter 200 is lifted to be staggered and aligned in the vertical direction with the first positioning portion 130 of the transporter engaging device 100, and the second positioning portion 240 is lowered to engage with the first positioning portion 130.

Referring to FIGS. 1 and 2, the engaging process of the battery swapping transporter 200 and the transporter engaging device 100 is set forth below in conjunction with an embodiment of the aforementioned method and apparatus.

First, the bracket body 110 of the transporter engaging device 100 is firstly fixed in place. For example, it is fixed before the battery pack storage platform exchange port, and the overall height of the bracket body 110 is adjusted to match the height of the battery swapping transporter by the foundation bolts 141. The guiding fork 121 is then fixed at the side of the bracket body 110 facing the transporter by a foundation bolt 141, and is preferably fixed in an intermediate position to facilitate guiding adjustment. The guiding shaft 231, which is fixed at the bottom of the bearing portion 210 of the battery swapping transporter 200, is then substantially aligned with the divergent guiding opening of the guiding fork 121 and the battery swapping transporter 200 is driven in the direction A. When the battery swapping transporter 200 moves, the direction of movement will be corrected with the assistance of the guiding roller 232 and the diverging guiding openings of the guiding fork 121 until the battery swapping transporter 200 moves to the desired location to be positioned. Subsequently, the battery swapping transporter 200 may be swung side-to-side in the direction B so that the positioning holes 242 thereon are aligned with the positioning pins 131 on the transporter engaging device 100. Thereafter, the bearing portion 210 is moved downward so as to fit the positioning pin 131 into the positioning hole 242, thereby enabling the entire engaging process of the battery swapping transporter and the transporter engaging device.

The above examples mainly illustrate a transporter engaging device, a battery swapping transporter, and an engaging method. While only some of the embodiments of the present invention have been described, it will be appreciated by those of ordinary skill in the art that the present invention may be implemented in many other forms without departing from the scope of the invention as defined by the appended claims. Accordingly, the illustrated examples and embodiments are to be considered as illustrative and not restrictive, and the invention may compass various modifications and alternations without departing from the scope of the invention as defined by the appended claims.

## Claims

1. A transporter engaging device (100), comprising:
a bracket body (110) which includes a top plate (111), a base (112), and a bracket post (113) supported between the top plate (111) and the base (112); wherein a guiding portion (120) is disposed on the base (112), and a positioning portion (130) is disposed on the top plate (111);
the guiding portion (120) disposed at a lower portion of the bracket body (110) and can provide guiding for an engaging action of the transporter; and
the positioning portion (130) disposed at an upper portion of the bracket body (110) and can be positioned in engagement with the transporter;
wherein the guiding portion (120) includes a guiding fork (121) disposed toward a transporter engaging side, the guiding fork (121) having a divergent guiding opening at a front end; and
wherein the positioning portion (130) comprises a positioning pin (131) disposed at the upper portion of the bracket body (110).

2. The transporter engaging device (100) of claim 1, further comprising a height adjusting portion (140) disposed on the base (112) for adjusting a height between the top plate (111) and a mounting reference plane of the bracket body (110).

3. The transporter engaging device (100) of claim 2, wherein the height adjusting portion (140) comprises a foundation bolt (141), and the base (112) comprises a first bottom plate (112a) connecting the bracket post (113), a second bottom plate (112b) disposed apart from the first bottom plate (112a) and is closer to the mounting reference plane; the foundation pin bolt (141) is interposed between the first bottom plate (112a) and the second bottom plate (112b), and is used for adjusting a distance between the first bottom plate (112a) and the second bottom plate (112b).

4. The transporter engaging device (100) of claim 1, wherein at least two of the positioning pins (131) are disposed at two sides of the upper portion of the bracket body (110), respectively.

5. A battery swapping transporter (200), comprising:
a bearing portion (210) used for bearing a battery to be replaced;
a moving portion (220) disposed at a bottom of the bearing portion (210) and used for driving the bearing portion (210) to move;
a guiding portion (230) disposed at a lower portion of the bearing portion (210) and can match with a guiding portion (120) of a transporter engaging device (100); and
a positioning portion (240) disposed at an upper portion of the bearing portion (210) and can match with a positioning portion (130) of the transporter engaging device (100);
wherein the guiding portion (230) includes a guiding shaft (231) extending in a vertical direction, the guiding shaft (231) matching with the guiding portion (120) of the transporter engaging device (100).

6. The battery swapping transporter (200) of claim 5, wherein the guiding portion (230) further comprises a guiding roller (232) coaxially disposed at the lower end of the guiding shaft (231), the guiding roller (232) rotatably matching with the guiding portion (120) of the transporter engaging device (100).

7. The battery swapping transporter (200) according to claim 5 or 6, wherein the bearing portion (210) is capable of lifting motion in the vertical direction; the positioning portion (240) comprises a positioning end plate (241) that protrudes by extending from the front portion of the bearing portion (210), a positioning hole (242) is disposed on the positioning end plate (241), and the positioning hole (242) can move in the vertical direction and match with the positioning portion (130) of the transporter engaging device (100).

8. The battery swapping transporter (200) according to claim 7, wherein at least two of the positioning end plates (241) are disposed at two sides of the front portion of the bearing portion (210), respectively.

9. An engaging method between a battery swapping transporter (200) and a transporter engaging device (100) for the transporter engaging device (100) according to any of claims 1 to 4 and the battery swapping transporter (200) according to any of claims 5 to 8, comprising:
a guiding step, wherein a guiding portion (230) of the battery swapping transporter (200) is in contact with a guiding portion (120) of the transporter engaging device (100) and moves to a location to be positioned along the guiding portion (120); and
a positioning step, wherein a positioning portion (240) of the battery swapping transporter (200) is lifted to be staggered and aligned with a positioning portion (130) of the transporter engaging device (100) in a vertical direction, and the positioning portion (240) of the battery swapping transporter (200) is lowered to engage with the positioning portion (130) of the transporter engaging device (100).

## Patentansprüche

1. Transporterandockvorrichtung (100), aufweisend:
einen Trägerkörper (110), der eine obere Platte (111), einen Sockel (112) und einen Trägerpfosten (113) aufweist, der zwischen der oberen Platte (111) und dem Sockel (112) gehalten wird; wobei ein Führungsabschnitt (120) an dem Sockel (112) angeordnet ist und ein Positionierungsabschnitt (130) an der oberen Platte (111) angeordnet ist;
wobei der Führungsabschnitt (120) an einem unteren Abschnitt des Trägerkörpers (110) angeordnet ist und eine Führung für eine Andockaktion des Transporters bereitstellen kann; und
wobei der Positionierungsabschnitt (130) an einem oberen Abschnitt des Trägerkörpers (110) angeordnet ist und zum Andocken mit dem Transporter positioniert werden kann;
wobei der Führungsabschnitt (120) eine Führungsgabel (121) aufweist, die in Richtung einer Transporterandockseite angeordnet ist, wobei die Führungsgabel (121) an einem vorderen Ende eine divergierende Führungsöffnung aufweist; und
wobei der Positionierungsabschnitt (130) einen Positionierungsstift (131) aufweist, der am oberen Abschnitt des Trägerkörpers (110) angeordnet ist.

2. Transporterandockvorrichtung (100) gemäß Anspruch 1, ferner aufweisend einen Höheneinstellabschnitt (140), der an dem Sockel (112) angeordnet ist, um eine Höhe zwischen der oberen Platte (111) und einer Montagebezugsebene des Trägerkörpers (110) einzustellen.

3. Transporterandockvorrichtung (100) gemäß Anspruch 2, wobei der Höheneinstellabschnitt (140) einen Fundamentbolzen (141) aufweist und der Sockel (112) eine erste Bodenplatte (112a), die den Trägerpfosten (113) verbindet, und eine zweite Bodenplatte (112b) aufweist, die von der ersten Bodenplatte (112a) beabstandet angeordnet ist und näher an der Montagebezugsebene liegt; der Fundamentbolzen (141) zwischen der ersten Bodenplatte (112a) und der zweiten Bodenplatte (112b) angeordnet ist und zum Einstellen eines Abstands zwischen der ersten Bodenplatte (112a) und der zweiten Bodenplatte (112b) verwendet wird.

4. Transporterandockvorrichtung (100) gemäß Anspruch 1, wobei mindestens zwei der Positionierungsstifte (131) jeweils an zwei Seiten des oberen Abschnitts des Trägerkörpers (110) angeordnet sind.

5. Batteriewechseltransporter (200), aufweisend:
einen Lagerabschnitt (210), der zum Lagern einer zu ersetzenden Batterie verwendet wird;
einen Bewegungsabschnitt (220), der an einem Boden des Lagerabschnitts (210) angeordnet ist und zum Ansteuern der Bewegung des Lagerabschnitts (210) verwendet wird;
einen Führungsabschnitt (230), der an einem unteren Abschnitt des Lagerabschnitts (210) angeordnet ist und mit einem Führungsabschnitt (120) einer Transporterandockvorrichtung (100) zusammenpassen kann; und
einen Positionierungsabschnitt (240), der an einem oberen Abschnitt des Lagerabschnitts (210) angeordnet ist und mit einem Positionierungsabschnitt (130) der Transporterandockvorrichtung (100) zusammenpassen kann;
wobei der Führungsabschnitt (230) eine in vertikaler Richtung verlaufende Führungswelle (231) aufweist, wobei die Führungswelle (231) mit dem Führungsabschnitt (120) der Transporterandockvorrichtung (100) zusammenpasst.

6. Batteriewechseltransporter (200) gemäß Anspruch 5, wobei der Führungsabschnitt (230) ferner eine Führungsrolle (232) aufweist, die koaxial am unteren Ende der Führungswelle (231) angeordnet ist, wobei die Führungsrolle (232) drehbar mit dem Führungsabschnitt (120) der Transporterandockvorrichtung (100) zusammenpasst.

7. Batteriewechseltransporter (200) gemäß Anspruch 5 oder 6, wobei der Lagerabschnitt (210) in der Lage ist, eine Hubbewegung in vertikaler Richtung auszuführen; der Positionierungsabschnitt (240) eine Positionierungsendplatte (241) aufweist, die aus dem vorderen Abschnitt des Lagerabschnitts (210) herausragt, ein Positionierungsloch (242) an der Positionierungsendplatte (241) angeordnet ist und das Positionierungsloch (242) sich in vertikaler Richtung bewegen kann und mit dem Positionierungsabschnitt (130) der Transporterandockvorrichtung (100) zusammenpasst.

8. Batteriewechseltransporter (200) gemäß Anspruch 7, wobei mindestens zwei der Positionierungsendplatten (241) jeweils an zwei Seiten des vorderen Abschnitts des Lagerabschnitts (210) angeordnet sind.

9. Andockverfahren zwischen einem Batteriewechseltransporter (200) und einer Transporterandockvorrichtung (100) für die Transporterandockvorrichtung (100) gemäß einem der Ansprüche 1 bis 4 und Batteriewechseltransporter (200) gemäß einem der Ansprüche 5 bis 8, aufweisend:
einen Führungsschritt, bei dem ein Führungsabschnitt (230) des Batteriewechseltransporters (200) in Kontakt mit einem Führungsabschnitt (120) der Transporterandockvorrichtung (100) ist und sich zu einer Stelle bewegt, um entlang des Führungsabschnitts (120) positioniert zu werden; und
einen Positionierungsschritt, bei dem ein Positionierungsabschnitt (240) des Batteriewechseltransporters (200) angehoben wird, um mit einem Positionierungsabschnitt (130) der Transporterandockvorrichtung (100) in vertikaler Richtung versetzt und ausgerichtet zu werden, und der Positionierungsabschnitt (240) des Batteriewechseltransporters (200) abgesenkt wird, um an dem Positionierungsabschnitt (130) der Transporterandockvorrichtung (100) anzudocken.

## Revendications

1. Dispositif de mise en prise de transporteur (100), comprenant :
un corps de support (110) qui comprend une plaque supérieure (111), une base (112), et un montant de support (113) supporté entre la plaque supérieure (111) et la base (112) ; dans lequel une partie de guidage (120) est disposée sur la base (112), et une partie de positionnement (130) est disposée sur la plaque supérieure (111) ;
la partie de guidage (120) est disposée sur une partie inférieure du corps de support (110) et peut fournir un guidage pour l'action de prise du transporteur ; et
la partie de positionnement (130) est disposée sur une partie supérieure du corps de support (110) et peut être positionnée en prise avec le transporteur ;
dans lequel la partie de guidage (120) comprend une fourche de guidage (121) disposée en direction d'un côté de prise de transporteur, la fourche de guidage (121) ayant une ouverture de guidage divergente au niveau d'une extrémité avant ; et
dans lequel la partie de positionnement (130) comprend une broche de positionnement (131) disposée au niveau d'une partie supérieure du corps de support (110).

2. Dispositif de mise en prise de transporteur (100) selon la revendication 1, comprenant en outre une partie de réglage de hauteur (140) disposée sur la base (112) pour régler une hauteur entre la plaque supérieure (111) et un plan de référence de montage du corps de support (110) .

3. Dispositif de mise en prise de transporteur (100) selon la revendication 2, dans lequel la partie de réglage de hauteur (140) comprend un boulon de fondation (141), et la base (112) comprend une première plaque inférieure (112a) reliée au montant de support (113), une seconde plaque inférieure (112b) étant disposée séparée de la première plaque inférieure (112a) et plus près du plan de référence de montage ; l'ergot de fondation (141) est interposé entre la première plaque inférieure (112a) et la seconde plaque inférieure (112b), et est utilisé pour régler une distance entre la première plaque inférieure (112a) et la seconde plaque inférieure (112b).

4. Dispositif de mise en prise de transporteur (100) selon la revendication 1, dans lequel au moins deux des broches de positionnement (131) sont disposées sur deux côtés de la partie supérieure du corps de support (110), respectivement.

5. Transporteur d'échange de batteries (200), comprenant :
une partie de support (210) utilisée pour porter une batterie à remplacer ;
une partie mobile (220) disposée en bas de la partie de support (210) et utilisée pour entraîner la partie de support (210) en déplacement ;
une partie de guidage (230) disposée sur une partie inférieure de la partie de support (210) et pouvant correspondre à une partie de guidage (120) d'un dispositif de mise en prise de transporteur (100) ; et
une partie de positionnement (240) positionnée sur une partie supérieure de la partie de support (210) et pouvant correspondre à une partie de positionnement (130) du dispositif de mise en prise de transporteur (100) ;
dans lequel la partie de guidage (230) comprend un arbre de guidage (231) s'étendant dans une direction verticale, l'arbre de guidage (231) correspondant à la partie de guidage (120) du dispositif de mise en prise de transporteur (100).

6. Transporteur d'échange de batteries (200) selon la revendication 5, dans lequel la partie de guidage (230) comprend en outre un rouleau de guidage (232) disposé coaxialement à l'extrémité inférieure de l'arbre de guidage (231), le rouleau de guidage (232) correspondant en rotation à la partie de guidage (120) du dispositif de mise en prise de transporteur (100).

7. Transporteur d'échange de batteries (200) selon la revendication 5 ou 6, dans lequel la partie de support (210) peut effectuer un mouvement de levage dans la direction verticale ; la partie de positionnement (240) comprend une plaque d'extrémité de positionnement (241) qui fait saillie en s'étendant depuis la partie avant de la partie de support (210), un trou de positionnement (242) est disposé sur la plaque d'extrémité de positionnement (241), et le trou de positionnement (242) peut se déplacer dans la direction verticale et correspondre à la partie de positionnement (130) du dispositif de mise en prise de transporteur (100).

8. Transporteur d'échange de batteries (200) selon la revendication 7, dans lequel au moins deux des plaques d'extrémité de positionnement (241) sont disposées sur deux côtés de la partie avant de la partie de support (210), respectivement.

9. Procédé de mise en prise entre un transporteur d'échange de batteries (200) et un dispositif de mise en prise de transporteur (100) pour le dispositif de mise en prise de transporteur (100) selon l'une quelconque des revendications 1 à 4 et le transporteur d'échange de batteries (200) selon l'une quelconque des revendications 5 à 8, comprenant :
une étape de guidage, lors de laquelle une partie de guidage (230) du transporteur d'échange de batteries (200) est en contact avec une partie de guidage (120) du dispositif de mise en prise de transporteur (100) et se déplace vers une position de positionnement le long de la partie de guidage (120) ; et
une étape de positionnement, lors de laquelle une partie de positionnement (240) du transporteur d'échange de batteries (200) est soulevée pour être étagée et alignée avec une partie de positionnement (130) du dispositif de mise en prise de transporteur (100) dans une direction verticale, et la partie de positionnement (240) du transporteur d'échange de batteries (200) est abaissée pour venir en prise avec la partie de positionnement (130) du dispositif de mise en prise de transporteur (100).
